# EUROPÄISCHE PATENTSCHRIFT

(11) **EP 0 631 086 B1**
(45) Veröffentlichungstag und Bekanntmachung des Hinweises auf die Patenterteilung: **18.08.1999**
(21) Anmeldenummer: 94250157.8
(22) Anmeldetag: 16.06.1994
(51) Int. Cl.: F16L 55/162, C04B 28/26

(54) **Verfahren zum Abdichten von Undichtigkeiten in wasserführenden Rohrleitungen und Behältern**
Process for sealing leaking water pipes and vessels
Procédé pour étanchéifier les fuites dans des conduites d'eau et des réservoirs

(30) Priorität: 24.06.1993 DE 4321629; 13.12.1993 DE 4342861
(43) Veröffentlichungstag der Anmeldung: 28.12.1994
(73) Patentinhaber: Klieboldt, Wilhelm, D-36323 Grebenau (DE)
(72) Erfinder: Klieboldt, Wilhelm, D-36323 Grebenau (DE)
(74) Vertreter: Meys, Hildegard, Dr.rer.nat.

(56) Entgegenhaltungen:
- WO-A-89/05887
- WO-A-92/06055
- DE-A- 1 646 660
- DE-A- 3 130 282
- CHEMICAL ABSTRACTS, vol. 94, no. 20, 18. Mai 1981, Columbus, Ohio, US; abstract no. 161561q, MILLER & FISCHER 'Properties of water glass gel used for corrosion reduction of exposed rebars in cracks in star cells of an off-shore concrete platform' Seite 302 ;Spalte 16 ; & CORROS. PROT. OFFSHORE, COMMUN., SYMP. INT. 1979

## Beschreibung

Die Erfindung bezieht sich auf ein Verfahren zum Abdichten von Undichtigkeiten in Gebäude-Rohrleitungen und Behältern mittels fluoridfreien, meist Cellulose enthaltenden wässrigen Abdichtmitteln auf Basis von flüssigem Wasserglas.

Bei wasserführenden Gebäude-Rohrleitungen und Flüssigkeits-Kreisläufen, die durch aus metallischem Werkstoff oder aus Kunststoff bestehende Rohrleitungen und Behälter geführt werden und durch diese zirkulieren, können mit der Zeit Korrosionserscheinungen am Rohr- und/oder Behältermaterial auftreten, die zu Undichtigkeiten, insbesondere an metallischem Mantel- und Rohrmaterial führen können, und die sich durch Flüssigkeitsverluste aus dem Kreislaufsystem oder dem Leitungsnetz bemerkbar machen. Solche Leckagen sind sowohl in Heizungsanlagen als auch in Trinkwasser-Rohrsystemen betriebsstörend und schädigen häufig das Leckage-Umfeld. Sie lassen sich mit speziellen Abdichtmitteln beheben, beispielsweise mit solchen Mitteln auf Basis von Wasserglas (Flüssigglas), wie sie beispielsweise in der DE-PS 31 30 282 des Anmelders beschrieben sind.

Wasserglas wird durch Luftkohlensäure zersetzt, und es fällt kolloidale Kieselsäure aus, die die faserigen Bestandteile im Abdichtmittel an den Leckagestellen bindet und dort verklebt, erhärtet und so die Leckstellen dichtet.

Diese Abdichtmittel müssen - da Flüssigglas bekanntlich hydrolyseempfindlich ist - sehr sorgfältig verarbeitet und in zuvor weitmöglich gesäuberten Rohrleitungs- und Behältersystemen angewendet werden. Dazu wird das System zunächst von Anlagenwasser oder Brauch- bzw. Trinkwasser entleert, gegebenenfalls mit Reinigungsflüssigkeit und/oder Frischwasser gespült und gewünschtenfalls getrocknet. Danach wird frisches Umlaufwasser eingefüllt, das Abdichtmittel in vorgeschriebener Menge zudosiert und die Anlage wird gefahren, es werden Temperatur und Druck auf vorgegebene Werte eingestellt, und es wird sorgfältig entlüftet. Es müssen, weil dabei insbesondere beim Abdichten von Heizungsanlagen auf relativ hohe Kesseltemperaturen, wie etwa 85°C, aufzuheizen ist, Misch- und Heizkörper- bzw. Leitungsrohr-Ventile voll geöffnet werden, und dies mindestens 4 Stunden lang. Trotz Einhaltung solcher bestimmten Arbeitsbedingungen kommt es gelegentlich vor, daß relativ enge Durchtrittsstellen im System, z.B. Ventile und Pumpengänge, infolge Gelbildung aus dem Wasserglasanteil des Abdichtmittels verengen und den ungehinderten Durchfluss des Kreislaufwassers störend beeinflussen. Hauptsächlich in den Lagern der Umwälzpumpe, gelegentlich auch an der heißen Innenwand der Heizkessel oder an Heizschlangen eines eingesetzten Heizgerätes können gelartige Ablagerungen auftreten, die zu Silikatbildung und zu Schäden führen.

Wenn Trinkwasserleitungen abzudichten sind, ist man darüber hinaus für den Abdichtarbeitsverlauf zeitgebunden. Es ist erforderlich, den Abdichtprozess in einem bestimmten begrenzten Zeitraum - möglichst nicht allzu langwierig - durchzuführen, denn im Trinkwasser darf aus hygienischen und gesundheitsvorschriftlichen Gründen kein Abdichtmittel verbleiben.

Man muß das Abdichtmittel vollständig aus dem Leitungssystem ausspülen, bevor die Trinkwasseranlage wieder in Betrieb genommen wird. Dies bedeutet, daß für die Durchführung des erfindungsgemäßen Abdichtverfahrens nur ein allenfalls auf wenige Tage beschränkter Zeitraum zur Verfügung steht, denn allzu lange kann man die Trinkwasser-Versorgung nicht abschalten.

Der Erfindung liegt die Aufgabe zugrunde, ein Verfahren zum Abdichten von Undichtigkeiten in wasserführenden Rohrleitungen und Behältern vorzuschlagen, mit dem es möglich ist, die Rohrleitungen und Behälter zu dichten, ohne daß die Gefahr einer Störung des Strömungsdurchflusses des wässrigen Mittels durch die Leitung aufkommt, und Verfahrensmaßnahmen in Vorschlag zu bringen, mit denen sich Undichtigkeiten aufweisende Trinkwasserleitungen einwandfrei abdichten lassen in einem Zeitraum, der vernünftigerweise dafür zur Verfügung steht.

Diese Aufgaben werden erfindungsgemäß durch die Merkmale des Anspruchs 1 gelöst, wobei in den Unteransprüchen 2 bis 12 noch zweckmäßige Ausgestaltungen der Erfindung gekennzeichnet sind.

Bei dem zuvor genannten bekannten Verfahren zum Abdichten von wasserführenden Rohranlagen und Behältern war man bestrebt, die Menge an flüssigem Wasserglas in dem Kreislaufwasser der zu sanierenden Rohranlagen und entsprechend in dem zuzugebenden Abdichtmittel so zu dosieren, daß sie relativ niedrig gehalten wurde, um ungünstige pH-Werte zu vermeiden und temperaturabhängige Ausfällungen von gelartiger Kieselsäure und dadurch bedingte Verengungen und Verstopfungen im System zu verhindern. Bisher konnten unter bestimmten Voraussetzungen Mengen von durchschnittlich 0,5 Gew.-%, allenfalls maximal 1 Gew.-% (als Feststoff berechnet) an Natriumsilikat enthaltenden Natronwasserglas-haltigen Abdichtflüssigkeiten störungsfrei zum Abdichten von Rohrleitungen eingesetzt werden, um den alkalischen pH-Wert relativ so niedrig wie möglich zu halten und Ausfällung von gelartiger Kieselsäure und dadurch bedingte Verengungen und Verstopfungen im System zu vermeiden.

Nun wurde überraschend gefunden, daß es darauf nicht ankommt, daß vielmehr im Gegenteil eine gegenüber der bisher üblichen Menge an Wasserglasanteil in der Heizungs- bzw. Trinkwasseranlage größere Menge an Wasserglas und ein höherer pH-Wert vorteilhaft sind. Erfindungsgemäß wird ein Abdichtmittel eingesetzt und so dosiert, daß man in dem System einen gegenüber der bisherigen anteiligen Wasserglasmenge um das Doppelte bis Dreifache und mehr erhöhten Wasserglasanteil in der Anlage sichert. Der pH-Wert muß so hoch wie 10,5 oder höher gehalten werden. Und es sollte vor Einfüllung des Abdichtmittels in die Anlagee sichergestellt werden, daß auch in engen Vorrichtungsteilen, z.B. Ventildurchlässen, keine eine nichtkalkulierbare Verdünnung bewirkende Kreislaufwasserreste vorhanden sind. Es lassen sich, wie gefunden wurde, sogar um etwa das 10-fache höher konzentrierte Wasserglaslösungen vorteilhaft für diese Zwecke einsetzen, wenn man erfindungsgemäß damit zusammen Cellulosefasern bestimmter Qualität in relativ geringer Menge verarbeitet und die Abdichtflüssigkeit mit relativ konstanter und relativ hoher Temperatur durch das zu sanierende Rohrleitungssystem zierkuliert.

In Heizungsanlagen wird zweckmäßig nach genauer Berechnung des Wasserinhalts der Anlage die erforderliche Menge an Abdichtflüssigkeit mittels einer Einfüllpumpe in die mit Anlagenwasser gefüllte Rohrleitungsanlage eingepumpt, zweckmäßig über den Heizkessel-Füll- und Entleerungshahn. Dabei sollte möglichst darauf geachtet werden, daß vorher alle Ventile und Hähne des Systems geöffnet werden. Nach dem Vermischen der Abdichtflüssigkeit mit dem Anlagenwasser wird zweckmäßig die Umwälzpumpe(n) entlüftet. Man öffnet dazu die Entlüftungsschraube(n) der Pumpe(n) und läßt ca. 50 ml an mit Abdichtmittel vermischtem Anlagenwasser dort austreten. Dadurch kommt das Abdichtmittel in ausreichender Menge auch in den Rotorraum der Pumpe(n). Es wird sicher jegliche auch nur örtliche zu starke Verdünnung vermieden und eventuelle Gelbildung sowie dadurch hervorgerufene Blockierung der Pumpe(n) sind sicher ausgeschlossen und treten nicht mehr auf.

Verschmutzte Heizungsanlagen sollten zweckmäßig vor dem Einbringen der Abdichtflüssigkeit gereinigt und gespült werden; jedoch kann das Abdichtmittel auch ohne diese Maßnahmen in ein Heizungsrohrleitungssystem eingefüllt werden.

Man kann gewünschtenfalls das Abdichtmittel kaltem zur Einfüllung in die von allen Flüssigkeitsresten befreite zu sanierende Anlage bestimmtem Einfüllwasser schon ausserhalb des Systems zumischen und dann das Gemisch in die Anlage einfüllen und umpumpen. Damit läßt sich unerwünschte Verdünnung vermeiden.

Insbesondere zur Abdichtung von Trinkwasserleitungen läßt sich das erfindungsgemäße Verfahren vorteilhaft mit Hilfe eines speziellen Heizgerätes, wie es beispielsweise in der Patentanmeldung EP-A-0 654 630 (Veröffentlichungstag 24.05.95) des Anmelders beschrieben ist, durchführen. Dabei wird die Abdichtflüssigkeit auf z.B. 80°C erhitzt, die erhitzte Abdichtflüssigkeit wird in den Leitungsrohrkreislauf eingespeist, z.B. eingepumpt, und durch die z.B. Kupferrohre der Leitung transportiert, so daß heiße Abdichtflüssigkeit das Kupferrohr leichzeitig erwärmt und an die undichte(n) Stelle(n) gelangt. Durch die Erwärmung des Rohrsystems trocknet das Umfeld der Leckagestelle(n) ab; das zuvor aus der bzw. den undichten Stelle(n) ausgetretene Wasser verdunstet. Die Abdichtflüssigkeit verdrängt das Wasser und tritt ihrerseits an der bzw. den undichten (Stelle(n) nach außen aus dem Rohr aus. Dort kommt das Silikat des Wasserglases mit Luft in Berührung; es bildet sich Kieselsäure, die sich gelartig verfestigt und mit den in der Abdichtflüssigkeit vorhandenen Faseranteilen der Cellulosefasern an der Leckstelle eine Art Verklebung bildet, die - infolge deren relativ hoher Temperatur und der relativ großen Kieselsäuremenge - wie gefunden wurde, in relativ kurzer Zeit austrocknet und erhärtet und die Leckstelle(n) sicher und bleibend schließt.

Es hat sich als zweckmäßig erwiesen, die Abdichtflüssigkeit unter Druck, in Heizungsanlagen vorteilhaft unter einem Druck von 0,5 - 2,5 bar und in Trinkwasserleitungen vorteilhaft unter einem Druck von 4 - 8 bar, durch das abzudichtende Leitungsrohrsystem zu zirkulieren. Der Druck kann in dem Fachmann bekannter Weise, beispielsweise hydraulisch oder pneumatisch,aufgebracht werden. Durch den Druck wird die Abdichtflüssigkeit an der Leckstelle aus dem Leitungsrohr schneller von innen nach außen ausgepreßt. An der Außenseite des Rohres kann die durch die Luft gebildete Kieselsäure dadurch rascher mit den Cellulosefasern vernetzt abtrocknen, erhärten und somit diese Stelle dauerhaft abdichten. Druckabfall im Leitungsrohr zeigt Undichtigkeit an, Druckkonstanz gibt Hinweis auf erfolgte sichere Abdichtung. Entsprechende Anzeige-Instrumente lassen sich in dem Fachmann bekannter Weise beim erfindungsgemäßen Verfahren einsetzen.

Es wurde gefunden, daß es in der Regel genügt, das erfindungsgemäße Verfahren über eine Zeitspanne von 24 Stunden zu fahren, um eine gute Abdichtung zu sichern.

Da Undichtigkeiten an solchen wasserführenden Rohrleitungen über Wochen und sogar Monate lang bestanden haben können, ehe sie beobachtet, festgestellt bzw. registriert werden, kann es vorkommen, daß das Umfeld von Leckstellen manchmal sehr naß ist. Dann empfiehlt es sich, das erfindungsgemäße Verfahren unter Umständen über einen Zeitraum von 2 bis 3 Tagen kontinuierlich in Betrieb zu halten.

Man kann Abdichtflüssigkeiten einsetzen, die zusätzlich Korrosionsinhibitoren enthalten.
Man kann wahlweise auch so arbeiten, daß man eine Härtungsstufe nachschaltet und dazu nach der Zirkulation der Abdichtflüsigkeit durch das zu sanierende Rohrleitungssystem dieses mit einer wässrigen Lösung eines Ausfällungshilfsmittels bzw. Härters durchspült, das als Verfestigungshilfe für das Silikat bzw. die Kieselsäure aus dem Abdichtmittel zu wirken vermag. Diese Arbeitsweise empfiehlt sich insbesondere dann, wenn die ursprünglichen Leckagen in dem abzudichtenden Rohrleitungssystem relativ großflächig waren.

Beim Sanieren von Trinkwasserleitungen wird nach erfolgter Abdichtung und gegebenenfalls zusätzlicher Härtung das Rohrleitungsnetz sorgfältig von Abdichtflüssigkeit und gegebenenfalls Härtemittelflüssigkeit freigespült, bevor die Trinkwasserinstallation wieder in Betrieb genommen wird.

Sollte ein Kreislauf nicht vorhanden oder herzustellen sein, kann das erfindungsgemäße Verfahren auch so variiert werden, daß ein zuvor in an sich bekannter Weise abgesperrtes Rohrleitungsteilstück wie zuvor beschrieben mit dem Abdichtmittel behandelt wird. Zweckmäßig läßt man dabei die Abdichtflüssigkeit 3 - 12 Stunden einwirken, bevor man sie aus dem zu sanierenden Rohrleitungsteilstück wieder entfernt. Danach kann dieses gespült werden und anschließend behandelt man vorteilhaft das Rohrleitungsteilstück noch mit einem schnellwirkenden Härter, z.B. einem solchen an sich bekannten Mittel auf Esterbasis. Auf diese Weise erhält man in kurzer Zeit eine starke Erhärtung und Abdichtung des behandelten Rohrleitungsteilstückes.

Die im erfindungsgemäß verwendeten Abdichtmittel eingesetzten Wasserglas-Qualitäten sind Handelsprodukte. Deren pH-Wert steigt beim Erhitzen auf die Wassersiedetemperatur an und zeigt, wenn z.B. auf 90°C erhitzt wird, einen um 0,2 bis 0,3 erhöhten Wert; und nach dem Erhitzen bleibt der pH-Wert der Lösung bei diesem höheren Wert.

Es wurde festgestellt, daß dieser Wert für die erfindungsgemäßen Zwecke mindestens 10,5 betragen muß. Liegt der pH-Wert des auf Basis von Natronwasserglas konzipierten Abdichtmittels, das im Kreislaufwasser enthalten ist, niedriger als 10,5, ist Gelbildung zu beobachten.
Liegt der pH-Wert im erfindungsgemäß verlangten Bereich von 10,5 bis 11,5, vorteilhaft zwischen 10,6 und 11,1, wurde 20 Stunden lang und länger in kochendem Leitungswasser mittlerer Härte keine Gelbildung festgestellt. Wenn man Natronwasserglaslösung der folgenden Qualität: Dichte bei 20°C 1,365 - 1,375 kg/cm³; 27,2 - 28,2% SiO₂ und 8,2 - 8,6% Na₂O; Rest Wasser; 35,4 - 36,8% Gesamtfeststoff; einsetzt, erreicht man den geforderten pH-Bereich von 10,5 - 11,5 mit Mengengehalten von 1,5 bis maximal 4%; bei diesen Konzentrationen kommt es nicht zu Ausfällungen. Wenn man Trinkwasserleitungen nach dem erfindungsemäßen Verfahren dichten will und relativ kurze Verfahrenszeiten anstrebt, hat es sich als zweckmäßig erwiesen, solche Qualitäten von Natronwasserglas einzusetzen, die ein Gewichtsverhältnis SiO₂: Na₂O von 3,7-3,9 bzw. ein solches Molverhältnis von 3,8 - 4,0 aufweisen. Speziell eignet sich Natronwasserglas mit einerDichte bei 20°C von 1,255 - 1,270 kg/cm³; 21,8 - 23,2% SiO₂, 5,6 - 6,0% Na₂O, Rest Wasser; 27,4 - 29,2% Gesamtfeststoff.

Auch die erfindungsgemäß verwendeten speziellen Cellulosefaserqualitäten sind auf dem Markt als Handelsprodukte erhältlich. Es handelt sich um natürliche Cellulosefasern, deren Ausgangsrohstoff reine und/oder technische Cellulose sein kann, deren Schüttgewichte bei 70 g/l - 100 g/l liegen, deren pH-Wert etwa zwischen 6,5 und 7,5 neutral rangiert, die, der Siebanalyse unterzogen, einen Siebrückstand (in Anlehnung an DIN 53734 / Luftstrahlsieb) bei einer lichten Maschenweite von 400 µm maximal 10% und bei einer lichten Maschenweite von 32 µm maximal 90% ergeben, und bei denen es sich um umweltfreundliche Produkte handelt. Zweckmäßig verwendet man solche Faserqualitäten, die einen Cellulosegehalt von mindestens 90% haben, wobei es vorteilhaft ist, wenn der Cellulosegehalt von 50% oder mehr der Fasermenge 99,5% ausmacht.

Wenn man Natronwasserglas in einer Menge (als Feststoff berechnet) von mindestens 10 Gew.-%, zweckmäßig 13 - 15 Gew.-%, für eine zur Sanierung von Trinkwasserleitungen bestimmte Abdichtflüssigkeit eindosiert und damit zusammen 0,3 - 0,6 Gew.-% an Cellulosefasern einer durchschnittlichen Faserstärke von 30 - 40 µm, vorzugsweise 35 µm, und einer durchschnittlichen Faserlänge von 500 - 600 µm verarbeitet und die Temperatur der durch das Leitungsrohrsystem zirkulierenden Abdichtflüssigkeit mit einer Temperaturvariationsbreite von etwa 10°C konstant im Temperaturbereich von etwa 40 - 85°C hält, dann gelingt es, wie überraschend gefunden wurde, unerwünschte gelartige Ausfällungen im Rohrsystem ebenfalls sicher zu vermeiden, und dabei an den Leckagestellen dennoch in kürzester Zeit die gewünschte Abdichtung zu erreichen.

Die Feststoff-Angaben beziehen sich auf das anwendungsfertige Mittel, in Wasser, das die Abdichtflüssigkeit darstellt.

Als Korrosionsinhibitoren eignen sich beim erfindungsgemäßen Verfahren dem Fachmann für diese Zwecke an sich bekannte Mittel, insbesondere Alkalisalze organischer nichtkorrosiver Säuren, Alkanolamine oder Buntmetallinhibitoren. Zu benennen sind beispielsweise Alkali-Phosphonate, auch z.B. Hydroxyethylidendiphosphonsäure und deren Salze. Auch für diese Zwecke bekannte Ethanolamine, wie Triethanolamin oder auch Diisopropanolamin können verwendet werden, ebenso wie Gemische von wasserlöslichen Salzen von Organophosphorsäuren. Diese auch für Trinkwassersysteme als Korrosionsschutzmittel einsetzbaren Produkte sind auf dem Markt unter verschiedenen Handelsnamen erhältliche Produkte.

Als Abdichthilfsmittel bzw. Härtemittel eignen sich für diese Zwecke an sich bekannte Produkte, beispielsweise Ammoniumphosphate, wie zweckmäßig (NH₄)₂HPO₄, oder andere Härter, wie Bernsteinsäure bzw. Ester und Phosphate.

Das erfindungsgemäße Verfahren hat den Vorteil, daß die bisherigen Komplikationen in Problembereichen solcher Heizungsanlagen nicht mehr auftreten. Die Wärmeleitfähigkeit der Kessel, die durch gelartige Ablagerungen und Silikatbildung vermindert oder sogar unterbrochen sein konnte, bleibt unvermindert erhalten. Dies ist insbesondere vorteilhaft für die moderne Heiztechnik, wobei mit wenig (ca. 7 - 30 Liter) Kesselinhalt einesehr schnelle Wärmeübertragung erzielt werden muß, sowie bei Durchlauferhitzern und bei Umwälzpumpen, die stromarm und elektronisch geregelt sind. Ein Ausfall der Pumpe, wodurch eine moderne Heizung gänzlich funktionsunfähig wird, infolge Verstopfung durch Gel- und Silikatbildung, ist nicht mehr zu befürchten. Einer der Vorteile der vorliegenden Erfindung liegt dementsprechend in der Vermeidung dieser Ausfälle. Ein weiterer Vorteil besteht darin, daß Trinkwasserleitungen in relativ kurzer Zeit sicher und sauber abgedichtet werden können, so daß das Installationssystem nur kurzfristig außer Betrieb genommen werden muß. Trinkwasserleitungs-Störungen lassen sich so schnell und effektiv beheben.

## Patentansprüche

1. Verfahren zum Abdichten von Undichtigkeiten in GebäuseRohrleitungen und Behältern, wobei Beton als Werkstoff ausgeschlossen ist, mittels fluoridfreien, gewünschtenfalls Cellulose enthaltenden wässrigen Abdichtmitteln auf Basis von flüssigem Wasserglas, bei dem vor dem Einbringen der Abdichtflüssigkeit das zu dichtende Behältnis und/oder Rohrleitungssystem gegebenenfalls entleert, gereinigt und/oder getrocknet wird, **dadurch gekennzeichnet,** dass eine Abdichtflüssigkeit verwendet wird, die aus einer verdünnten Lösung besteht, welche ausschliesslich eine bei Wassersiedetemperatur einen pH-Wert von ≧ 10,5 bis ≦ 11,5 ergebende Menge an Natronwasserglaslösung und gewünschtenfalls auch Cellulose enthält, und diese Lösung bei einer Temperatur im Bereich von 30 - 90°C und unter einem Druck gefahren wird, der im Bereich von 0,5 - 2,5 oder 4 - 8 bar liegt.

2. Verfahren nach Anspruch 1, **dadurch gekennzeichnet**, dass eine Abdichtflüssigkeit verwendet wird, die aus einer verdünnten Lösung besteht, welche eine bei Wassersiedetemperatur einen pH-Wert zwischen 10,6 und 11,1 ergebende Menge an Natronwasserglaslösung enthält.

3. Verfahren nach Anspruch 1 oder 2, dadurch gekennzeichnet, daß für das Abdichten von Heizungs-, Abwasser- und/oder sonstigen Anlagenwasser-Anlagen das Abdichtmittel mit einer Natronwasserglas-Qualität einer Dichte von 1,365-1,375 kg/cm³ bei 20°C, 27,2 - 28,2% SiO₂ und 8,2 - 8,6% Na₂O, Rest Wasser, 35,4 - 36,8% Gesamtfeststoff, in einer 1,5 bis 2,5 g Feststoff je 100 g Abdichtmittel ergebenden Menge verwendet wird.

4. Verfahren nach Anspruch 3, dadurch gekennzeichnet, daß die Abdichtflüssigkeit in Heizungsanlagen unter einem Druck von 0,5 bis 2,5 bar durch das abzudichtende Leitungsrohrsystem zirkuliert wird.

5. Verfahren nach Anspruch 1 oder 2, dadurch gekennzeichnet, daß zur Abdichtung von Trinkwasserleitungen eine Abdichtflüssigkeit verwendet wird, die Natronwasserglas in einer Menge von mindestens 10 Gew.-% Feststoff ergebend und Cellulosefasern mit durchschnittlicher Faserstärke von 30 - 40 µm, vorzugsweise 35 µm, und durchschnittlicher Faserlänge von 500 - 600 µm in einer Menge von 0,3 - 0,6 Gew.-% vorzugsweise 0,5 Gew.-% enthält, und daß die Abdichtflüssigkeit mit einer Temperatur von mindestens 60°C bis höchstens 90°C durch das abzudichtende Leitungsrohrsystem zirkuliert wird.

6. Verfahren nach Anspruch 5, dadurch gekennzeichnet, daß die Abdichtflüssigkeit unter einem Druck von 4 - 8 bar durch das abzudichtende Leitungsrohrsystem zirkuliert wird.

7. Verfahren nach Anspruch 5 oder 6, dadurch gekennzeichnet, daß für das Abdichten von Trinkwasseranlagen das Abdichtmittel mit einer Natronwasserglas-Qualität einer Dichte von 1,255 - 1,270 kg/cm³ bei 20°C, 21,8 - 23,2 % SiO₂, 5,6- 6,0 % Na₂O, Rest Wasser, 27,4 - 29,2 % Gesamtfeststoff, in einer 13 - 15 g Feststoff je 100 g Abdichtflüssigkeit ergebenden Menge verwendet wird.

8. Verfahren nach Anspruch 1 bis 7, dadurch gekennzeichnet, daß in dem Abdichtmittel an sich bekannte Inhibitoren und/oder Korrosionsschutzmittel mitbenutzt werden.

9. Verfahren nach Anspruch 1 bis 8, dadurch gekennzeichnet, daß als Korrosionsinhibitoren wasserlösliche Phosphate mitverwendet werden.

10. Verfahren nach Anspruch 1 bis 9, dadurch gekennzeichnet, daß nach der Zirkulation der Abdichtflüssigkeit durch das abzudichtende Leitungsrohrsystem dieses mit einer wässrigen Abdichthilfsmittel bzw. Härter enthaltenden Flüssigkeit gespült wird.

11. Verfahren nach Anspruch 5 bis 10, dadurch gekennzeichnet, daß die Abdichtflüssigkeit während einer Zeitspanne von mindestens 24 Stunden durch das abzudichtende Leitungsrohrsystem zirkuliert wird.

12. Verfahren nach Anspruch 1 bis 10, dadurch gekennzeichnet, daß zum Abdichten eines Rohrleitungsteilstücks die Behandlungszeit mit der Abdichtflüssigkeit kurz, vorzugsweise 3 bis 12 Stunden lang gewählt wird und nach dem Entfernen der Abdichtflüssigkeit aus dem abzudichtenden Rohrleitungsteilstück dieses mit einer einen schnellwirkenden Härter enthaltenden Flüssigkeit behandelt wird.

## Claims

1. Process for sealing leakages in building pipelines and vessels, concrete being excluded as material, by means of aqueous sealing agents being free of fluoride and containing, if desired cellulose, and being based on liquid water-glass, in which process, before pouring in the sealing liquid, the vessel and/or pipeline system to be sealed is emptied, cleaned and/or dried, if required, characterised in that a sealing liquid is used consisting of a diluted solution which contains exclusively a quantity of sodium silicate solution resulting in an index of pH of ≧ 10.5 up to ≦ 11.5 at water boiling temperature, and, if desired also cellulose, and that this solution is used at a temperature in the region of 30° to 90° C and under a pressure lying in the region of 0.5 to 2.5 bar or 4 to 8 bar.

2. Process as claimed in claim 1, characterised in that a sealing liquid is used consisting of a diluted solution containing a quantity of sodium silicate solution resulting in an index of pH between 10.6 and 11.1 at water boiling temperature.

3. Process as claimed in claim 1 or 2, characterised in that for the sealing of heating installations, waste water installations and/or other water system installations the sealing agent is used with a sodium silicate quality having a density of 1.365 tc 1.375 kg/cm³ at 20° C, 27.2 to 28.2 % SiO₂ and 8.2 to 8.6 % Na2O, residual water, 35.4 to 36.8 % total solid matter in such a quantity which results in 1.5 to 2.5 g solid matter per 100 g sealing agent.

4. Process as claimed in claim 3, characterised in that the sealing liquid is circulated, in the case of heating installations, at a pressure of 0.5 to 2.5 bar through the pipeline system to be sealed.

5. Process as claimed in claim 1 or 2, characterised in that for the sealing of drinking water pipes a sealing liquid is used containing sodium silicate in such an amount resulting in at least 10 % by weight solid matter and cellulose fibres with an average fibre strength of 30 to 40 µm, preferably 35µm, and an average fibre length of 500 to 600 µm in a quantity of 0.3 to 0.6 % by weight, preferably 0.5 % by weight, and that the sealing liquid is circulated through the pipeline system to be sealed at a temperature of at least 60°C to 90°C at the most.

6. Process as claimed in claim 5, characterised in that the sealing liquid is circulated through the pipeline system to be sealed at a pressure of 4 to 8 bar.

7. Process as claimed in claim 5 or 6, characterised in that for the sealing of drinking water installations the sealing agent is used with a sodium silicate quality with a density of 1.255 to 1.270 kg/cm³ at 20°C, 21.8 to 23.2 % SiO₂, 5.6 to 6.0 % Na₂O, residual water, 27.4 to 29.2 % total solid matter in such a quantity which results in 13 to 15 g solid matter per 100 g sealing liquid.

8. Process as claimed in claims 1 to 7, characterised in that inhibitors and/or corrosion preventatives known per se are used in common in the sealing agent.

9. Process as claimed in claims 1 to 8, characterised in that as corrosion inhibitors water-soluble phosphates are used in common.

10. Process as claimed in claims 1 to 9, characterised in that after the circulation of the sealing liquid through the pipeline system to be sealed the latter is rinsed with a liquid containing an aqueous auxiliary sealing agent or a hardening agent, respectively.

11. Process as claimed in claims 5 to 10, characterised in that the sealing liquid is circulated through the pipeline system to be sealed over a period of time of at least 24 hours.

12. Process as claimed in claims 1 to 10, characterised in that for sealing a fragment of a pipeline, the time of treatment with the sealing liquid is chosen so as to be short, preferably 3 to 12 hours, and after removing the sealing liquid from the fragment of the pipeline to be sealed the latter is treated with a liquid containing a quickly acting hardening agent.

## Revendications

1. Procédé pour colmater des défauts d'étanchéité dans des récipients et dans des canalisations de bâtiments dans lesquels on exclut le béton à titre de matériau, au moyen d'agents d'étanchéification aqueux exempts de fluorures, contenant le cas échéant de la cellulose, à base de verre soluble liquide, dans lequel, avant d'introduire le liquide d'étanchéification, on vide le cas échéant le récipient et/ou le système de canalisation à étancher, on le nettoie et/ou on le sèche, caractérisé en ce qu'on utilise un liquide d'étanchéification qui est constitué d'une solution diluée qui contient exclusivement une quantité d'une solution de silicate de soude procurant à la température d'ébullition de l'eau une valeur de pH de ≥ 10,5 à ≤ 11,5, et qui contient le cas échéant de la cellulose, et on fait passer cette solution à une température dans le domaine de 30° à 90°C et sous une pression qui se situe dans le domaine de 0,5 à 2,5 ou de 4 à 8 bar.

2. Procédé selon la revendication 1, caractérisé en ce qu'on utilise un liquide d'étanchéification qui est constitué d'une solution diluée qui contient une quantité d'une solution de silicate de soude procurant, à la température d'ébullition de l'eau, une valeur de pH entre 10,6 et 11,1.

3. Procédé selon la revendication 1 ou 2, caractérisé en ce qu'on utilise, pour l'étanchéification de dispositifs de chauffage, d'eaux usées et/ou d'autres eaux d'installation, l'agent d'étanchéification possédant une qualité de silicate de soude présentant une densité de 1,365-1,375 kg/cm³ à 20°C, du SiO₂ à concurrence de 27,2-28,2% et du Na₂O à concurrence de 8,2 à 8,6%, le reste étant de l'eau, possédant une teneur totale en substances solides représentant de 35,4 à 36,8%, en une quantité procurant de 1,5 à 2,5 g de substances solides par 100 g d'agents d'étanchéification.

4. Procédé selon la revendication 3, caractérisé en ce qu'on met le liquide d'étanchéification en circulation dans des installations de chauffage sous une pression de 0,5 à 2,5 bar à travers le système de canalisation à étancher.

5. Procédé selon la revendication 1 ou 2, caractérisé en ce qu'on utilise, pour l'étanchéification de canalisations pour l'eau potable, un liquide d'étanchéification qui contient du silicate de soude en une quantité procurant une teneur en substances solides s'élevant à au moins 10% en poids, ainsi que des fibres de cellulose possédant une épaisseur de fibres moyennes de 30 à 40 µm, de préférence de 35 µm, et une longueur de fibres moyennes de 500 à 600 µm en une quantité de 0,3 à 0,6% en poids, de préférence de 0,5% en poids, et en ce qu'on met en circulation le liquide d'étanchéification à une température d'au moins 60°C jusqu'à une température maximale de 80°C à travers le système de canalisation à étancher.

6. Procédé selon la revendication 5, caractérisé en ce qu'on met le liquide d'étanchéification en circulation à travers le système de canalisation à étancher sous une pression de 4 à 8 bar.

7. Procédé selon la revendication 5 ou 6, caractérisé en ce qu'on utilise, pour l'étanchéification d'installations pour l'eau potable, l'agent d'étanchéification contenant une qualité de silicate de soude d'une densité de 1,255-1,270 kg/cm³ à 20°C, du SiO₂ à concurrence de 21,8 à 23,2%, du Na₂O à concurrence de 5,6 à 6,0%, le reste étant de l'eau, et possédant une teneur totale en substances solides représentant de 27,4 à 29,2%, en une quantité procurant de 13 à 15 g de substances solides par 100 g du liquide d'étanchéification.

8. Procédé selon les revendications 1 à 7, caractérisé en ce qu'on utilise de manière conjointe, dans l'agent d'étanchéification, des inhibiteurs et/ou des agents de protection contre la corrosion connus en soi.

9. Procédé selon les revendications 1 à 8, caractérisé en ce qu'on utilise de manière conjointe, à titre d'inhibiteurs de la corrosion, des phosphates solubles.

10. Procédé selon les revendications 1 à 9, caractérisé en ce que, après la mise en circulation du liquide d'étanchéification à travers le système de canalisation à étancher, on rince ce dernier avec un liquide contenant des durcisseurs, respectivement des agents d'étanchéification aqueux.

11. Procédé selon les revendications 5 à 10, caractérisé en ce qu'on met le liquide d'étanchéification en circulation pendant un laps de temps d'au moins 24 heures à travers le système de canalisation à étancher.

12. Procédé selon les revendications 1 à 10, caractérisé en ce que, pour l'étanchéification d'un tronçon d'une canalisation, on sélectionne un temps de traitement avec le liquide d'étanchéification de courte durée, de préférence de 3 à 12 heures, et, après avoir éliminé le liquide d'étanchéification du tronçon de canalisation à étancher, on le traite avec un liquide contenant un durcisseur à action rapide.
